# EUROPEAN PATENT APPLICATION

(11) **EP 1 638 250 A1**
(43) Date of publication of application: **22.03.2006**
(21) Application number: 03785478.3
(22) Date of filing: 31.12.2003
(51) Int. Cl.: H04L 12/24

(54) **A NETWORK MANAGEMENT SYSTEM OF VIRTUAL PRIVATE NETWORK AND THE METHOD THEREOF**

(30) Priority: 08.06.2003 CN 03137545
(71) Applicant: Huawei Technologies Co., Ltd., Longgang District, Shenzehen, Guangdong 518129 (CN)
(72) Inventor: FAN, Xiaoji;Huawei Administration Building, Shenzhen, Guangdong 518129 (CN); SHI, Yang;Huawei Administration Building, Shenzhen, Guangdong 518129 (CN); DONG, Xin;Huawei Administration Building, Shenzhen, Guangdong 518129 (CN)
(74) Representative: Collin, Jérôme
(86) International application number: PCT/CN2003/001160
(87) International publication number: WO 2004/109976

(57) **Abstract**

The present invention provides a Network Management System (NMS) of Virtual Private Network (VPN), comprising the provider NMS and the customer NMS, **characterized in that**: there is a customer network management agent functional module between the provider NMS and the customer NMS, said module is connected with the OSF functional module in the provider NMS via f-interface. The present invention also provides a method for implementing a Network Management System (NMS) of Virtual Private Network (VPN), which comprises the provider NMS and the customer NMS, **characterized in that**: the customer NMS is connected with the OSF module in the provider NMS via f-interface to implement customer network management agent. The present invention employs f-interface to connect with the OSF module in the provider NMS, so as to obtain all traffic data required for implementing CNM function, thereby overcoming the complexity in interface in the prior art and the security problem in data interface between CNM client and server.

## Description

### FIELD OF THE INVENTION

The present invention relates to a Customer Network Management (CNM) system in the field of data communication network management, and the method thereof, and particularly to a Virtual Private Network (VPN) CNM system based on f-interface in Telecommunications Management Network (TMN) functional model and CNM Agent Function (CAF) in Web technology, and the method thereof.

### BACKGROUND OF THE INVENTION

A VPN is a private network constructed over public network. Presently, more and more businesses employ VPNs to construct corporate networks, so as to pay less attention to network operation and maintenance through entrusting the task to experienced and specialized network providers. The Network Management System (NMS) of the corporate manages both the private network and the public network provided by the network provider. Wherein, the management of the public network has to be done with necessary network management information obtained via the service interface of the public network provided by the network provider. The CNM service can be used as a means for management of the public network provided from the network provider to corporate customers, to facilitate the NMS of the customers to monitor the public network. Of course, such monitoring is limited to the part related to the customer or providing service to the customer. A major service provided by VPN CNM is: the network provider present VPN topology, network configuration, network status, and network performance to the customers.

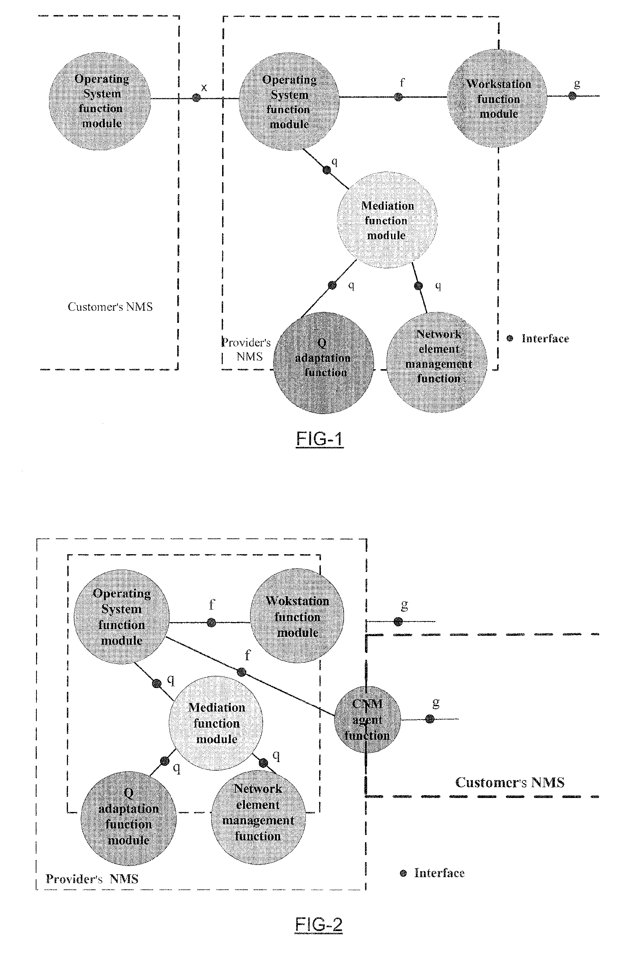

As shown in Figure 1, in the prior art, the customer NMS is interfaced with the network provider NMS via x-interface according to TMN functional model. In the prior art, the CNM solution is usually as follows: the provider's NMS provides an interface to the external and implement CNM function in the customer NMS. However, the drawback is in that the implementation is difficult as there are engineering problems such as x-interface standardization and data security in implementation of interfacing between two NMSs via x-interface.

### SUMMARY OF THE INVENTION

In view of above problem, the present invention provides a VPN CNM system based on f-interface in TMN functional model and CAF in Web technology, and the method thereof, in order to overcome the drawback in the prior art.

A network management system of virtual private network, comprising the provider network management system and the customer network management system, characterized in that: there is a Customer Network Management Agent Functional (CAF) module between the provider NMS and the customer NMS; said module is interfaced with the OSF functional module in the provider NMS via f-interface, so as to implement customer network management agent.

Wherein, the customer network management system employs an architecture constituted by the following three layers: a client layer running in a browser, a centralized controller layer running in a Web server of the provider's website, and a business layer containing the customer network management agent functional module; the client layer is connected with the centralized controller layer through a network; the centralized controller layer is connected with the business layer through the network or dedicated line.

The client layer comprises a browser and a CNM interface running on the browser, which is oriented to a customer to provide a CNM Graphic User Interface (GUI). The centralized controller layer comprises request controller, message codec, and message transceiver modules, which run on the Web server of the provider's website. The business layer is constituted with the CNM agent in the provider NMS.

The client layer accesses the network through the customer's network equipment; the centralized controller layer accesses the network through the provider's network equipment. Said network refers to Internet or another private network.

The VPN CNM system described in the present invention is an implementation of the CAF; the implementation is as following: the VPN CNM system is connected with the OSF module in the provider NMS via f-interface, so as to implement customer network management agent and provide g-interface to the customer. The CAF mainly delivers two functions: (1) Due to the fact that the functions provided by the CNM is a subset of the client functions of NMS, all traffic data required for implementing CNM functions can be obtained via f-interface, and thereby it is unnecessary to provide a new interface by OSF; (2) a GUI is provided to the end customer of VPN service via g-interface with Web technology. The f-interface between CAF and OSF as described in the present invention can be a standard interface in the TMN functional model or an interface extended according to the functional requirements for the CAF.

The present invention also provides a method for implementing a network management system of virtual private network, the network management system comprising the provider NMS and the customer NMS, characterized in that: the customer NMS is connected with the OSF module in the provider NMS via f-interface to implement customer network management agent.

Said method comprises the following steps:
a. the customer submitting a CNM function request;
b. decoding the CNM function request and encapsulating it into a NMS message;
c. identifying the type of CNM function in the NMS message, determining the associated NMS functional module, and using f-interface to send the NMS message to the corresponding functional module of the NMS for processing;
d. encapsulating the processing result returned from the corresponding functional module of the NMS into a NMS response message;
e. generating a display page according to the NMS response message;
f. displaying the page.

Wherein, in step a, the management function request submitted in the client browser through the following steps:
a1. judging whether the customer has logged in; if the customer has logged in, going to step a3; otherwise
a2. entering the CNM customer information and generating a CNM function request, and going to step a4;
a3. choosing from the CNM functions and generating a CNM function request;
a4. sending the CNM function request.

In the above step b, the process in which the CNM function request is decoded and encapsulated into a NMS message comprises the following steps:
b1. decoding the received CNM function request;
b2. judging whether the data in the request is complete; if it is complete, going to step b4; otherwise
b3. generating an error page and sending it back to the client browser for display, and terminating the process;
b4. encapsulating the request into a NMS message.

The present invention overcomes the complexity in interface in the prior art. F-interface is an interface that has to be provided by OSF in NMS; CNM can obtain all traffic data required to implement the functions via f-interface, thereby, it is unnecessary to define a new interface by OSF. Meanwhile, the CAF is completely provided by the network provider, and the end customer accesses the functions provided by CNM system through Web; therefore, there is no complex interface customization in interfacing and intercommunication between IT systems in engineering implementation.

The present invention also overcomes the problems in data security in the prior art; the CNM calculation function is completely implemented by the provider, and the controllability of CNM data by the provider network management is improved. The client has to pass the security authentication on the server and the access to data is highly limited.

### BRIEF DESCRIPTION OF THE DRAWINGS

Figure 1 shows an implementation of VPN CNM in the prior art;
Figure 2 shows an implementation of VPN CNM based on f-interface according to an embodiment of the present invention;
Figure 3 shows the constitution of VPN CNM System according to the embodiment of the present invention;
Figure 4 is a flow diagram of the VPN CNM implementation method according to the embodiment of the present invention;
Figure 5 is a flow diagram of CNM function request decoding and NMS message encapsulation in the VPN CNM implementation method according to the embodiment of the present invention;
Figure 6 is a flow diagram of submitting the CNM function request in the VPN CNM implementation method according to the embodiment of the present invention.

### DETAILED DESCRIPTION OF AN EMBODIMENT

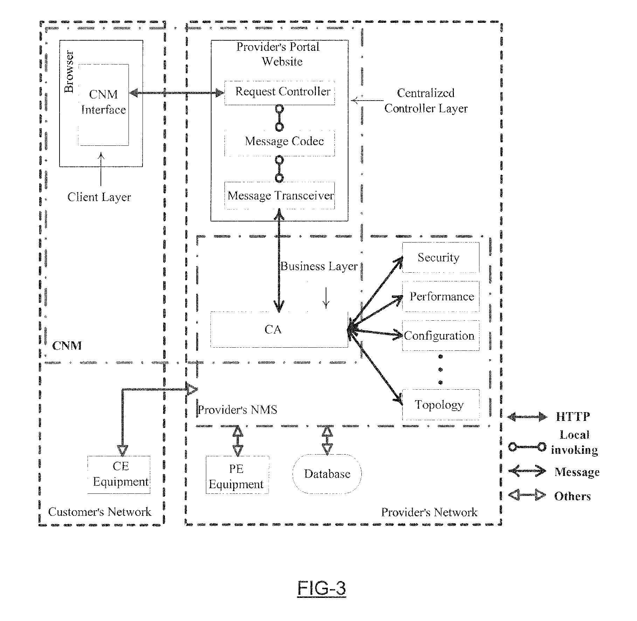

Hereinafter the VPN CNM system according to an embodiment of the present invention is described with reference to Figures 2 and 3.

As shown in Figure 2, the VPN CNM system is an particular implementation of CAF; wherein, the CAF is connected with the provider's OSF module via f-interface and provides g-interface to the customer; the CAF provides two functions: (1) all traffic data required for implementing CNM function can be obtained via f-interface, and thereby it is unnecessary to define a new interface by OSF; (2) a GUI is provided to the end customer of VPN service via g-interface with Web technology.

In the embodiment of the present invention, the interface between OSF and CAF can be a standard f-interface in TMN functional model or an interface extended on the basis of a standard f-interface.

As shown in Figure 3, the customer NMS in the VPN CNM according to the embodiment of the present invention employs an architecture constituted by the following three layers: a client layer running in a browser, a centralized controller layer running on a Web server of the provider's website, and a business layer running in the provider NMS. The client layer comprises a browser and a CNM interface running on the browser; wherein, the CNM interface provides a Graphic User Interface (GUI) to the customer. The centralized controller layer comprises request controller, message codec, and message transceiver modules running on the Web server of the provider's website, and is responsible for managing service flow control and communication protocol adaptation. The business layer comprises CNM Agent (CA) running in the provider NMS, and it is connected with the provider NMS via f-interface and responsible for collecting management requests of CNM customers from the centralized controller layer and committing the requests to the respective functional modules of NMS for processing. The client layer is connected with the centralized controller layer through Internet or another private network and accesses Internet or another private network through the customer's network equipment; the centralized controller layer accesses Internet or another private network through the provider's network equipment and is connected with the business layer through Internet, a private network, or a private line.

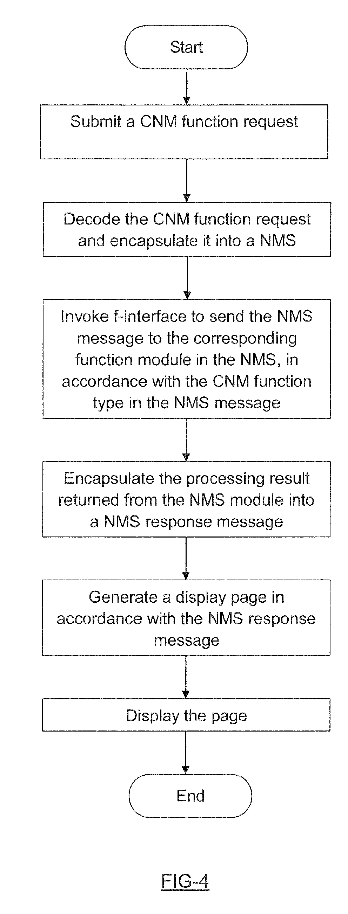

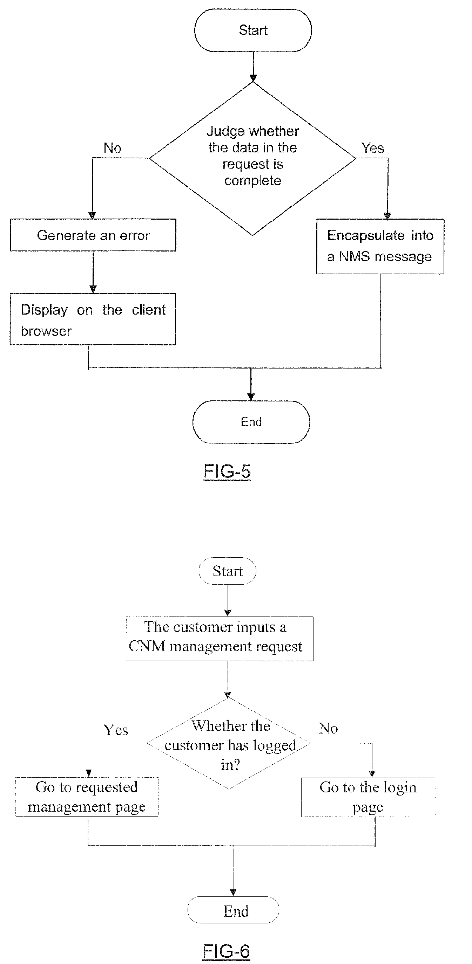

Hereinafter the implementation flow of VPN CNM system according to the embodiment of the present invention is described with reference to Figures 4 and 5. The processing flow of a typical CNM service implemented in the embodiment of the present invention comprises CNM customer login flow and CNM function processing flow; wherein:

The CNM customer login flow is as follows:
1) the customer accesses the portal website (Web server) provided by the provider through the local browser and a login window of the CNM system;
2) the customer enters CNM customer information (e.g., user name and password) into the login window and submits the authentication form;
3) the browser HTTP-codes the CNM customer information and then sends it to the Web server;
4) the Web server forwards the received request string to the request controller for processing;
5) the request controller decodes the request string via HTTP protocol, and judges whether the data in the request string is complete; if it is complete, the request controller sends it to the message codec for processing and goes to step 6; otherwise the request controller generates an error page and sends it back to the client browser for display;
6) the message codec re-encapsulates the decoded parameters into a NMS message using the private communication protocol within the NMS and sends it to the message transceiver;
7) the message transceiver sends the NMS message to CA for processing;
8) the CA receives the NMS message and identifies the message is a "customer login authentication message" in the service scope of the security module in the NMS system, and then invokes f-interface to send a function processing request to the security module;
9) the security module receives the message forwarded form the CA and immediately starts processing it, and then returns the processing result to the CA;
10) the CA then encapsulates the processing result into a response message and sends it to the message transceiver;
11) the message transceiver forwards the message directly to the message codec for processing;
12) the message codec decodes the message and then sends it to the request controller;
13) the request controller controls the display of the CNM system interface on the client according to the login authentication result encapsulated in the message; if the authentication is successful, the main interface of CNM system management function will be displayed to the customer directly; otherwise the CNM system login interface will be display again to force the customer to login again.

In the above flow, steps 1, 2, 3, 4, 5, and 13 cover the usage interface of the GUI being provided to the customer via g-interface in TMN functional model by Web browser, Web server, and request controller; steps 6, 7, 8, 9, 10, 11, and 12 in the above flow cover the data required for CNM being obtained by message codec, message transceiver, and CA via f-interface.

The processing flow of CNM management function is as follows:
1) the customer chooses a specific management function (e.g., viewing topology of the customer VPN) on the main interface of CNM system management function displayed on the browser;
2) the browser HTTP-codes the topology viewing request and then sends it to the Web server;
3) the Web server forwards the received request string to the request controller for processing;
4) the request controller decodes the request string via HTTP protocol and then sends it to the message codec;
5) the message codec re-encapsulates the decoded parameters using the private communication protocol within the NMS into a NMS message and then sends it to the message transceiver;
6) the message transceiver sends the NMS message to CA for processing;
7) the CA receives the NMS message and identifies it is a "VPN topology acquisition message" and belongs to the topology module in the NMS, and then invokes f-interface to send a function processing request to the topology module;
8) the topology module receives the message forwarded form the CA, and immediately starts processing it, and then returns the processing result to the CA;
9) the CA then encapsulates the processing result into a response message and sends it to the message transceiver;
10) the message transceiver forwards the message directly to the message codec for processing;
11) the message codec decodes the message and then sends it to the request controller;
12) the request controller reconstructs the topological diagram in accordance with the customer VPN topological data encapsulated in the message and returns it to the customer browser for display.

In the above flow, steps 1, 2, 3, 4, 5, and 12 cover the usage interface of GUI being provided via g-interface in TMN functional model by Web browser, Web server, and request controller; steps 6, 7, 8, 9, 10, and 11 cover the data required for CNM being obtained via f-interface by message codec, message transceiver, and CA.

As shown in Figure 6, the customer accesses the portal website (Web server) provided by the provider with the local browser through the following steps:
(1) the customer inputs a CNM function request at the browser;
(2) when the Web server receives the customer's request, it checks whether the customer has logged in correctly; there is a record on the Web server if the customer has logged in;
(3) if the customer has logged in, the requested management function page will be displayed; otherwise the system will jump to the login page directly to force the customer to log in.

What has been described above is only a preferred embodiment of the present invention; however, those skilled in the art can design other technical solutions on the basis of the concept disclosed here, without deviating from the spirit of the present invention.

## Claims

1. A Network Management System (NMS) of Virtual Private Network (VPN), comprising the provider network management system and the customer network management system, **characterized in that**: there is a customer network management agent functional module between the provider NMS and the customer NMS; said module is connected with the OSF functional module in the provider NMS via f-interface, so as to implement the customer network management agent.

2. The system according to claim 1, **characterized in that**: the customer NMS employs an architecture constituted by the following three layers: a client layer running in a browser, a centralized controller layer running on a Web server in the provider's website, and a business layer comprising the customer network management agent functional module; the client layer being connected with the centralized controller layer through a network; the centralized controller layer being connected with the business layer through the network or dedicated line.

3. The system according to claim 2, **characterized in that**: said client layer comprises a browser and a CNM interface running on the browser, which is oriented to a customer to provide a CNM Graphic User interface (GUI).

4. The system according to claim 2, **characterized in that**: said centralized controller layer comprises request controller, message codec, and message transceiver modules, which running on the Web server of the provider's website.

5. The system according to claim 2, **characterized in that**: said business layer comprises a CNM agent in the provider NMS.

6. The system according to claim 2, **characterized in that**: said client layer accesses said network through the customer's network equipment; said centralized controller layer accesses said network through the provider's network equipment; said network is Internet or another private network.

7. A method for implementing a Network Management System (NMS) of Virtual Private Network (VPN), which comprises the provider NMS and the customer NMS, **characterized in that**: the customer NMS is connected with the OSF module in the provider NMS via f-interface, so as to implement customer network management agent.

8. The method according to claim 7, **characterized in that**: said method comprises the following steps:
a. the customer submitting a CNM function request;
b. decoding the CNM function request and encapsulating it into a NMS message;
c. identifying the type of the CNM function in the NMS message, determining the associated NMS functional module, and using f-interface to send the NMS message to the corresponding functional module in the NMS for processing;
d. encapsulating the processing result returned from the corresponding functional module in the NMS into a NMS response message;
e. generating a display page according to the NMS response message;
f. displaying the page.

9. The method according to claim 8, **characterized in that**: in step a, the management function request is submitted in the client browser through the following steps:
a1. judging whether the customer has logged in; if the customer has logged in, going to step a3; otherwise
a2. entering the CNM customer information and generating a CNM function request, and going to step a4;
a3. choosing from the CNM functions and generating a CNM function request;
a4. sending the CNM function request.

10. The method according to claim 8, **characterized in that**: in above step b, the process in which the CNM function request is decoded and encapsulated into a NMS message comprises the following steps:
b1. decoding the received CNM function request;
b2. judging whether the data in the request is complete; if it is complete, going to step b4; otherwise
b3. generating an error page and sending it back to the client browser for display, and then terminating the process;
b4. encapsulating the request into a NMS message.
